# EUROPÄISCHE PATENTSCHRIFT

(11) **EP 0 809 013 B1**
(45) Veröffentlichungstag und Bekanntmachung des Hinweises auf die Patenterteilung: **05.01.2005**
(21) Anmeldenummer: 97105515.7
(22) Anmeldetag: 03.04.1997
(51) Int. Cl.: F02M 31/07

(54) **Verfahren und Vorrichtung zum Betreiben einer Brennkraftmaschine**
Method and device for operating an internal combustion engine
Procédé et dispositif pour le fonctionnement d'un moteur à combustion interne

(30) Priorität: 27.04.1996 DE 19617035
(43) Veröffentlichungstag der Anmeldung: 26.11.1997
(73) Patentinhaber: Volkswagen Aktiengesellschaft, 38436 Wolfsburg (DE)
(72) Erfinder: Jahrens, Hans-Ulrich, Dipl.-Ing., 38120 Braunschweig (DE); Schmidt, Werner, 38542 Leiferde (DE)

(56) Entgegenhaltungen:
- DE-A- 2 214 804
- DE-A- 3 737 699
- DE-A- 4 122 775
- DE-B- 2 011 654
- DE-B- 2 821 649
- JP-A- 7 317 638

## Beschreibung

Die Erfindung betrifft ein Verfahren zum Betreiben einer Brennkraftmaschine gemäß Patentanspruch 1 und eine Brennkraftmaschine gemäß dem Oberbegriff des Patentanspruches 2.

Aus der DE-A-22 14 804 ist es bekannt, der dort verwendeten Brennkraftmaschine Ansaugluft entweder als Kaltluft oder als Warmluft über eine Ansaugleitung in Abhängigkeit der Brennkraftmaschinentemperatur und der Last zuzuführen. Die Umschaltung erfolgt innerhalb eines Luftfilters mittels einer Warmluftklappe, welche von einem als Druckdose ausgebildeten, pneumatischen Stellmotor betätigt wird. Die Druckdose wird dabei von der, sich über dem als Drosselklappe ausgebildeten Leistungsstellglied einstellenden, Druckdifferenz beaufschlagt. In Abhängigkeit davon, ob sich der Motor im kalten oder im betriebswarmen Zustand befindet, öffnet oder schließt ein bimetallbestücktes Ventil im Zuge einer den Unterdruck zwischen Saugrohr und Druckdose übertragenden Leitung.

Des weiteren ist es grundsätzlich bekannt, eine Brennkraftmaschine mit einer elektronischen Motorsteuerung zu versehen, welche wesentliche Funktionen innerhalb von verschiedenen Systemen der Brennkraftmaschine steuert bzw. regelt, wie etwa ein Zündsystem, ein Kraftstoffversorgungssystem oder ein Ansaugsystem. Darüber hinaus beinhalten solche Motorsteuerungen häufig zusätzliche Funktionen, wie etwa eine Leerlauf-Füllungsregelung, eine Lambda-Regelung und eine Klopfregelung.

Aus der DE-B-2 011 654 ist eine gattungsgemäße Brennkraftmaschinen bekannt. Ein temperaturabhängig betätigtes Belüftungsventil in Form eines Bimetallthermostaten bestimmt die Zuführung von Warmluft in den Ansaugstrom für verschiedene Betriebsbereiche der Brennkraftmaschine. Ein Außenstutzen des Belüftungsventils für eine zu einem pneumatischen Stellmotor führende Steuerleitung ist mit einem kalibrierten Drosselquerschnitt versehen.

Die DE-B-28 21 649 beschreibt eine Vorrichtung zur Regelung der Temperatur der Ansaugluft von Brennkraftmaschinen analog der Vorrichtung gemäß der oben erwähnten DE-A-2 011 654, wobei zusätzlich ein Rückschlagventil mit kalibrierter Durchgangsbohrung vorgesehen ist. Die kalibrierte Durchgangsbohrung verbindet Räume stromauf und stromab eines Ventilkörpers des Rückschlagventils.

Aus der DE-A-221 4804 ist eine Vorrichtung zum temperatur- und lastabhängigen Verstellen einer im Luftfilter einer Brennkraftmaschine schwenkbar gelagerten Warmluftklappe bekannt. Durch ein zusätzliches Rückschlagventil wird eine Regelcharakteristik für die Warmluftklappe während einer Wannlaufphase unterbunden, damit die Brennkraftmaschine möglichst schnell ihre Betriebstemperatur erreicht.

Aus JP-A-07317638 und DE-A-41 22 775 sind jeweils Klopfregelungen für Brennkraftmaschinen bekannt.

Der Erfindung liegt die Aufgabe zugrunde, ein Verfahren zum Betreiben einer Brennkraftmaschine und eine Brennkraftmaschine zu schaffen, welcher in Abhängigkeit zumindest eines Betriebsparameters Ansaugluft entweder als Kaltluft oder als Warmluft über eine Ansaugleitung zugeführt wird, mittels denen eine Kraftstoffverbrauchsreduzierung und somit eine Absenkung der Schadstoffemissionen erzielt wird.

Die Lösung dieser Aufgabe gelingt bei einem Verfahren der o.g. Art mit den in Anspruch 1 angegebenen Merkmalen und bei einer Brennkraftmaschine der o.g. Art mit den kennzeichnenden Merkmalen des Patentanspruches 2.

Bei einem Verfahren der o.g. Art ist es erfindungsgemäß vorgesehen, dass
(a) wobei das Gehäuseinnere des Reglers (11) mit dem Innenvolumen des Luftfilters (5) verbunden wird,
(b) wobei sowohl im betriebskalten als auch im betriebswarmen Zustand der Brennkraftmaschine in einem ersten Bereich (B1) eines Last-/Drehzahl-Kennfeldes der Brennkraftmaschine (1) Warmluft und in einem zweiten Bereich (B2) nur Kaltluft zugeführt wird,
(c) wobei über den gesamten Drehzahlbereich der Brennkraftmaschine (1) in dem ersten Bereich (B1) Warmluft bis zum Erreichen eines im Regler (11) voreinstellbaren, oberen Lufttemperaturwertes, zugeführt wird, und der Regler (11) anschließend unter Zumischung von Kaltluft im Bereich (B1) auf diesen Lufttemperaturwert regelt,
(d) wobei über den gesamten Drehzahlbereich der Brennkraftmaschine (1) in dem zweiten Bereich (B2) atmosphärische Kaltluft, unabhängig von deren Temperatur und ausschließlich von dem Luftdruck stromab des Leistungsstellgliedes (9) abhängig, zugeführt wird, und
(e) wobei nur in dem ersten Bereich (B1) der temperaturabhängig arbeitende Regler (11) aktiv ist und beide Bereiche durch eine Grenzlinie (GL) des Kennfeldes entsprechend einem konstanten Luftdruck stromab des Leistungssteuergliedes (9) voneinander getrennt sind,
(f) der Brennkraftmaschine eine Motorsteuerung mit einer Klopfregelung zugeordnet ist,
(g) die Klopfregelung in beiden Bereichen (B1 und B2) wirksam ist und
(h) in Schritt (c) zusätzlich zur Zuführung von Warmluft das Leistungsstellglied in Abhängigkeit von der aktuellen Ansauglufttemperatur derart verstellt wird, dass der für die gewünschte Leistung erforderliche Luftmassenstrom zugeführt wird.

Bei einer Brennkraftmaschine der o.g. Art ist es erfindungsgemäß vorgesehen, dass
(e) der Brennkraftmaschine eine Motorsteuerung mit Klopfregelung zugeordnet ist und
(f) eine Ansteuerung für das Leistungsstellglied derart ausgebildet ist, dass diese zusätzlich zur Regelung der Zuführung von Warmluft das Leistungsstellglied in Abhängigkeit von der aktuellen Ansauglufttemperatur derart verstellt, dass sich der für die gewünschte Leistung erforderliche Luftmassenstrom ergibt.

Der Brennkraftmaschine wird über eine Ansaugleitung in Abhängigkeit zumindest eines Betriebsparameters Ansaugluft entweder als Kaltluft aus der Umgebung oder als vorerwärmte Warmluft, gegebenenfalls unter Zumischung von Kaltluft zugeführt, wobei die Brennkraftmaschine im Zuge der Ansaugleitung ein lastregelndes Leistungsstellglied aufweist. Der Brennkraftmaschine ist weiterhin eine eine Klopfregelung beinhaltende Motorsteuerung zugeordnet. Für eine kraftstoffverbrauchsreduzierende Entdrosselung der Brennkraftmaschine ist vorgesehen, dass in einem ersten Bereich eines Last-/Drehzahl-Kennfeldes Warmluft zugeführt wird. Die Zufuhr von im Vergleich zur kalten Umgebungsluft warmer Luft bedeutet eine Zufuhr von Luft mit verringerter Dichte. Zur Erzielung einer gewünschten Fahrleistung, etwa einer gewünschten, konstanten Fahrgeschwindigkeit, muss das Leistungsstellglied zusätzlich zu der hierfür erforderlichen Lastanforderung bei kalter Luft in Abhängigkeit der aktuellen Ansauglufttemperatur derart verstellt werden, dass die für die gewünschte Leistung forderliche Luftmasse zugeführt werden kann.

Die durch das weitere Öffnen des Leistungsstellgliedes erzielte Entdrosselung der Brennkraftmaschine durch zugeführte Warmluft kann in Abhängigkeit des jeweiligen Betriebspunktes Verbrauchsreduzierungen zwischen 2 und 5 Prozent realisieren. Mit steigender Warmlufttemperatur wächst jedoch die Klopfneigung jeder Brennkraftmaschine. Hier greift die Klopfregelung derart ein, dass ein klopffreier Betrieb bis zu vergleichsweise hohen Warmlufttemperaturen möglich ist, wobei in an sich bekannter Weise durch die Klopfregelung der Zündwinkel zylinderindividuell kurzzeitig zurückgenommen wird.

Zur Vermeidung einer unzulässigen, klopfenden Verbrennung bei Überschreiten bestimmter Drosselklappenwinkel ist es vorgesehen, dass in einem zweiten Bereich des Last-/Drehzahl-Kennfeldes Kaltluft zugeführt wird, wobei in beiden erwähnten Bereichen die Klopfregelung aktiv ist. Die beiden Bereiche des Kennfeldes sind durch eine Linie entsprechend einer konstanten Druckdifferenz über dem Leistungsstellglied voneinander getrennt. Da diese Druckdifferenz über dem Leistungsstellglied von dessen Stellung abhängig ist und diese wiederum, wie bereits vorerwähnt, von der Dichte, d. h. der Temperatur der zugeführten Luft, ist eine thermostatisch geführte Unterdruckregelung zur Umschaltung zwischen den beiden Bereichen derart möglich, dass in dem ersten Bereich mit Warmluftzufuhr die Temperatur der zugeführten Luft maßgeblich ist und somit hier der Verbrauchsvorteil erzielt wird, während in dem zweiten Bereich mit Kaltluftzufuhr nur die Druckdifferenz über dem Leistungsstellglied maßgeblich ist und hier die sonst bei Warmluftzufuhr auftretende, schädliche klopfende Verbrennung weitgehend vermieden ist.

Weitere Vorteile der Erfindung ergeben sich aus dem nachfolgend anhand einer Zeichnung näher erläuterten Ausführungsbeispiel. Es zeigen:
- Fig. 1: eine schematische Ansicht einer erfindungsgemäßen Vorrichtung,
- Fig. 2: einen temperaturabhängig arbeitenden Regler gemäß Figur 1 und
- Fig. 3: ein Last-/Drehzahl-Kennfeld einer Brennkraftmaschine.

Eine insgesamt mit 1 bezeichnete Brennkraftmaschine weist eine insgesamt mit 2 bezeichnete Ansaugleitung auf, welcher ein Kaltluftstutzen 3, ein Warmluftstutzen 4, ein Luftfilter 5 sowie ein Saugrohr 6 zugeordnet ist. Auslassseitig weist die Brennkraftmaschine einen Abgaskrümmer 7 auf, welcher in einem Bereich von einem mit dem Warmluftstutzen 4 verbundenen Wärmetauscher 8 umgeben ist.

Im Zuge des austrittsseitig mit dem Luftfilter 5 verbundenen Saugrohres 6 ist als ein dessen Querschnittsfläche veränderndes, lastregelndes Leistungsstellglied eine Drosselklappe 9 angeordnet. Stromab dieser Drosselklappe 9 zweigt von dem Saugrohr 6 eine Verbindungsleitung 10 ab, welche mit einem innerhalb des Luftfilters 5 angeordneten Regler 11 verbunden ist. Die Verbindungsleitung 10 ist dabei auf einen Stutzen 12 des Reglers 11 aufgeschoben und auf einen weiteren Stutzen 13 ist eine weitere Verbindungsleitung 14 aufgeschoben, welche mit einem als unterdruckbetätigte Druckdose ausgebildeten Stellmotor 15 verbunden ist. Dieser betätigt in an sich aus der genannten DE-OS 22 14 804 bekannten Weise eine in die Ansaugleitung 2 zwischen dem Kaltluftstutzen 3 und dem Warmluftstutzen 4 eingesetzte Warmluftklappe 16.

Innerhalb eines Gehäuses 17 des Reglers 11, welcher bezüglich seines Aufbaus und seiner Funktion z. B. aus DE-28 21 649 B2 bekannt ist, ist ein Bimetallstreifen 18 befestigt, dessen freies Ende ein Verschlussglied 19 trägt. Dem Innenvolumen des Luftfilters 5 zugewandt trägt das Gehäuse 17 eine kalibrierte Bohrung 20. Das gehäuseinnere des Reglers 11 steht weiterhin über eine im Vergleich zur Bohrung 20 relativ groß bemessene Verbindungsleitung 21 mit dem Innenvolumen des Luftfilters 5 in Verbindung. Auf eine endseitige Öffnung dieser Verbindungsleitung 21 wirkt das Verschlussglied 19.

Der Brennkraftmaschine 1 ist weiterhin eine Motorsteuerung 22 in Form eines Steuergerätes zugeordnet, in welcher eine Klopfregelung 23 integriert ist. Diese Klopfregelung 23 empfängt über eine elektrische Verbindungsleitung 24 zylinderindividuelle Signale eines Klopfsensors 25. Die Motorsteuerung 22 verarbeitet in an sich bekannter Weise mehrere Parameter der Brennkraftmaschine und steht unter anderem mit einer Zündspule 26 in Verbindung, welche ihrerseits mit einem Zündverteiler 27 der Brennkraftmaschine 1 zusammenwirkt.

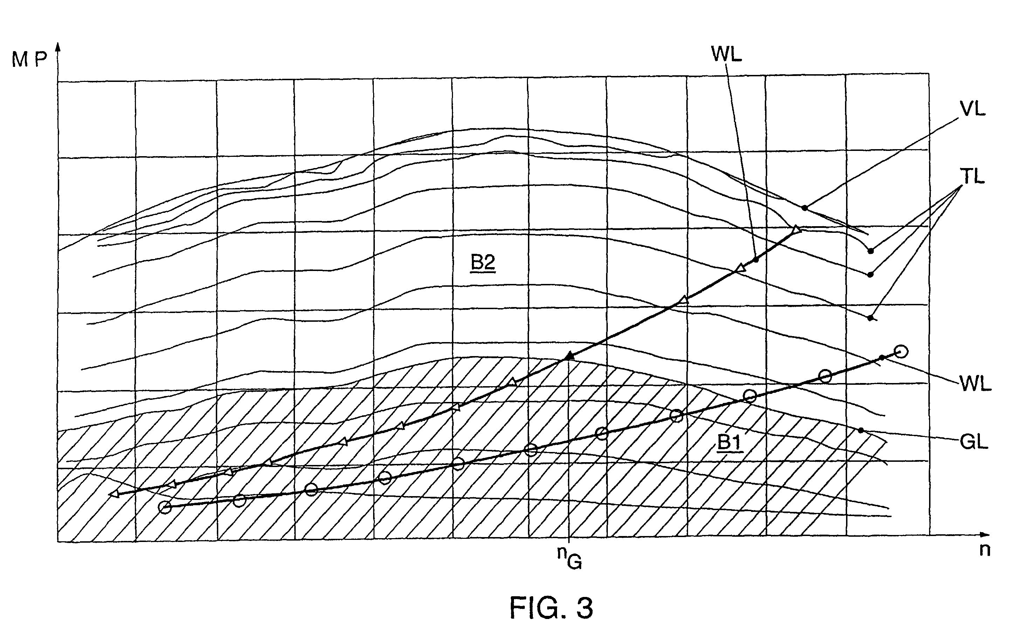

Figur 3 zeigt ein Last-/Drehzahl-Kennfeld der Brennkraftmaschine 1. Hierin ist als Indikator für die Last der Mitteldruck MP über der Drehzahl n aufgetragen. Nach oben ist das Kennfeld durch eine Vollastkennlinie VL begrenzt, während darunter ausgewählte Linien TL für bestimmte Teillastzustände eingezeichnet sind. Diese Linien TL sind jeweils Linien eines konstanten Luftdruckes, welcher stromab der Drosselklappe 9 im Saugrohr 6 vorliegt, d. h. Linien einer konstanten, über der Drosselklappe 9 herrschenden Druckdifferenz Δp. Weiterhin eingezeichnet sind zwei ausgewählte Fahrwiderstandslinien WL, wie sie sich bei einem mit einer erfindungsgemäßen Brennkraftmaschine 1 ausgestatteten Kraftfahrzeug im realen Fahrbetrieb einstellen. Das Kraftfahrzeug sei hierbei mit einem Stufenschaltgetriebe ausgestattet, wobei die obere Widerstandslinie WL sich bei eingelegtem fünften Gang einstellt und die untere Linie WL die Fahrwiderstandslinie im vierten Gang darstellt.

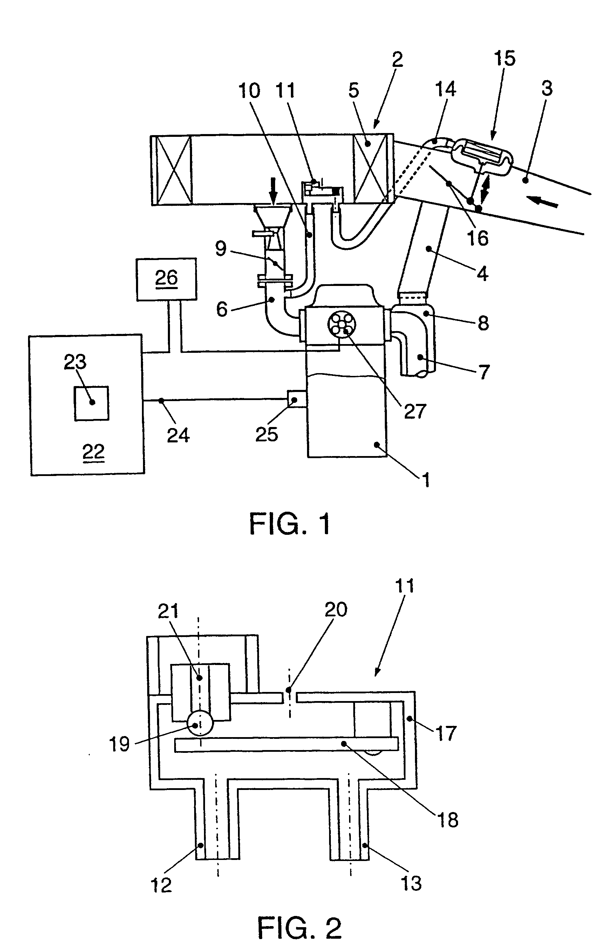

Der Betrieb der Brennkraftmaschine 1 stellt sich verfahrensgemäß wie folgt dar. Nach einem Kaltstart der Brennkraftmaschine wird dem Reglergehäuse 17 über die Bohrung 20 ein unbedeutender Volumenstrom mit vergleichsweise kühler Luft zugeführt, so dass der Bimetallstreifen 18 mittels des Verschlussgliedes 19 die in Figur 2 gezeigte, die Verbindungsleitung 21 verschließende Stellung einnimmt. Bei vergleichsweise kleinen Drosselklappenwinkeln, die entweder manuell oder über ein so genanntes E-Gas eingestellt sein können, stellt sich eine vergleichsweise große Druckdifferenz Δp über der Drosselklappe 9 ein. Dieser Unterdruck steht über die Verbindungsleitung 10, Stutzen 12 und 13 sowie Verbindungsleitung 14 am Stellmotor 15 und zieht die Warmluftklappe 16 in eine den Kaltluftstutzen 3 absperrende und den Warmluftstutzen 4 öffnende Stellung. Hierdurch ist gewährleistet, dass vergleichsweise schnell über den Wärmetauscher 8 vorerwärmte Ansaugluft als Warmluft der Brennkraftmaschine zugeführt wird. Da diese Warmluft, welche aus Anteilen der Kaltluft und der im Wärmetauscher 8 vorerwärmten Luft bestehen kann, eine geringere Dichte als atmosphärische Kaltluft aufweist, wird die Drosselklappe 9 zur Erzielung der gewünschten Fahrleistung weiter geöffnet werden, um somit den für diese Leistung erforderlichen Luftmassenstrom sicherzustellen. Dieses Öffnen der Drosselklappe 9 bedeutet eine Entdrosselung der Brennkraftmaschine 1, wodurch deren spezifischer Kraftstoffverbrauch günstig beeinflusst wird.

In diesem Betriebszustand ist der über die Bohrung 20 einströmende, mit Umgebungsluftdruck versehene Luftstrom vernachlässigbar gering. Dieser Luftstrom, welcher sich im weiteren Betrieb der Brennkraftmaschine 1 stetig erwärmt, beeinflusst jedoch den Bimetallstreifen 18 dahingehend, dass die Verbindungsleitung 21 in zunehmendem Maße geöffnet wird. Das bedeutet, dass in zunehmendem Maße, in Abhängigkeit der sich erwärmenden Ansaugluft, eine zunehmend wirksam werdende Verbindung zwischen dem Innenvolumen des Luftfilters 5 sowie der stromabseitigen Lage der Drosselklappe 9 bereitgestellt wird. Zusätzlich zu dieser temperaturabhängigen Veränderung der Lage des Verschlussgliedes 19 stellt sich infolge von veränderten Drosselklappenwinkeln, d. h. unterschiedlichen Lastanforderungen, ein mit zunehmenden Drosselklappenwinkeln abnehmender Unterdruck über die Drosselklappe ein, d. h. die Druckdifferenz Δp fällt ab, wodurch in zunehmendem Maße die Warmluftklappe 16 den Kaltluftstutzen 3 frei gibt und den Warmluftstutzen 4 zunehmend verschließt.

Die diese beiden, sich überlagernden Effekte beeinflussenden Komponenten der Vorrichtung sind dabei so aufeinander abgestimmt, dass in einem ersten, in Figur 3 schraffiert dargestellten Bereich B1 der temperaturbeeinflusste Regeleffekt durch den Bimetallstreifen 18 wirksam ist, während nach dem Unterschreiten einer voreinstellbaren Druckdifferenz Δp im zweiten Kennfeldbereich B2 diese Regelung nicht aktiv ist.

Der Regeleffekt innerhalb des Bereiches B1 läuft dabei derartig ab, dass nach einem Kaltstart und Temperaturwerten der Ansaugluft unterhalb des vorgegebenen, oberen Lufttemperaturwertes ein vergleichsweise kleiner Kaltluftanteil und ein vergleichsweise großer, vorerwärmter Luftanteil zugeführt wird. Ist der obere Lufttemperaturwert, z. B. 60° C erreicht, so stellt sich eine Lage der Warmluftklappe 16 etwa gemäß Figur 1 ein. Durch die dann auftretende, zunehmende Öffnung der Verbindungsleitung 21 und des damit verbundenen Einbrechens der Druckdifferenz Δp schiebt der Stellmotor 15 die Warmluftklappe 16 geringfügig weiter in Richtung Öffnen des Kaltluftstutzens 3. Hierdurch erniedrigt sich die der Brennkraftmaschine 1 zugeführte Lufttemperatur und die Dichte dieser Luft steigt an, so dass bei dann geringfügig kleineren Drosselklappenwinkeln die Druckdifferenz Δp erneut zunimmt, was wiederum ein geringfügiges Bewegen der Warmluftklappe 16 in Richtung Öffnen des Warmluftstutzens 4 zur Folge hat. Somit pendelt die Lage der Warmluftklappe 16 ständig innerhalb des Regelbereiches des Reglers 11 um eine Mittellage, welche ihrerseits vom aktuellen Temperaturniveau der der Brennkraftmaschine zugeführten Ansaugluft abhängig ist.

Wird ein mit dieser Brennkraftmaschine 1 ausgestattetes Kraftfahrzeug beispielsweise gemäß der oberen Fahrwiderstandslinie WL gemäß Figur 3 im fünften Gang in der Ebene bewegt, so ist die Zufuhr von Warmluft aufgrund der vorgenannten Regelcharakteristik bis zum Erreichen einer Grenzdrehzahl n_{G} wirksam. Bei Erreichen einer Grenzlinie GL, welche die Bereiche B1 und B2 voneinander trennt und welche, ebenso wie alle Teillastkennlinien TL eine Linie konstanter Druckdifferenz Δp über der Drosselklappe 9 darstellt, ist die Druckdifferenz Δp so gering, dass der Stellmotor 15 die Warmluftklappe 16 in eine den Warmluftstutzen 4 verschließende Stellung verschwenkt und somit ausschließlich atmosphärische Kaltluft angesaugt wird. Dieses Verschließen des Warmluftstutzens 4 tritt ebenfalls bei starken Lastsprüngen auf, wenn beispielsweise aus dem Bereich B1 durch schlagartiges Öffnen der Drosselklappe 9 durch einen steilen Abfall der Druckdifferenz Δp in den Bereich B2 gesprungen wird.

Die an sich bekannte Klopfregelung 23 ist in beiden Bereichen B1 und B2 wirksam. Die an sich durch die Zufuhr von Warmluft zunehmende Klopfneigung der Brennkraftmaschine 1 wird durch die zylinderindividuelle Klopfregelung dahingehend kompensiert, dass in einem vergleichsweise großen Bereich B1 des Kennfeldes mit der die Brennkraftmaschine 1 entdrosselnden Warmluftregelung gefahren werden kann. Ohne den Einsatz der Klopfregelung 23 müsste die Grenzlinie GL mit deutlichem Abstand zu der eingezeichneten Lage weiter nach unten, d. h. in Richtung abnehmender Drosselklappenwinkel verschoben sein. Ebenso müsste der Zündwinkel vor OT der Brennkraftmaschine 1 deutlich zurück genommen werden, was sich wirkungsgradverschlechternd auf jede Brennkraftmaschine auswirkt.

## Patentansprüche

1. Verfahren zum Betreiben einer Brennkraftmaschine (1), welcher über eine Ansaugleitung (2) Ansaugluft als Kaltluft aus der Umgebung oder vorerwärmte Warmluft last- und/oder temperaturabhängig zugeführt wird, wobei im weiteren Zuge der Ansaugleitung (2) ein deren Querschnittsfläche veränderndes, lastregelndes Leistungsstellglied (9) angeordnet ist und der stromab dazu anliegende Luftdruck unter Zwischenschaltung eines zumindest temperaturabhängig arbeitenden Reglers (11) den Zustrom von Kaltluft steuert,
(a) wobei das Gehäuseinnere des Reglers (11) mit dem Innenvolumen des Luftfilters (5) verbunden wird,
(b) wobei sowohl im betriebskalten als auch im betriebswarmen Zustand der Brennkraftmaschine in einem ersten Bereich (B1) eines Last-/Drehzahl-Kennfeldes der Brennkraftmaschine (1) Warmluft und in einem zweiten Bereich (B2) nur Kaltluft zugeführt wird,
(c) wobei über den gesamten Drehzahlbereich der Brennkraftmaschine (1) in dem ersten Bereich (B1) Warmluft bis zum Erreichen eines im Regler (11) voreinstellbaren, oberen Lufttemperaturwertes, zugeführt wird, und der Regler (11) anschließend unter Zumischung von Kaltluft im Bereich (B1) auf diesen Lufttemperaturwert regelt,
(d) wobei über den gesamten Drehzahlbereich der Brennkraftmaschine (1) in dem zweiten Bereich (B2) atmosphärische Kaltluft, unabhängig von deren Temperatur und ausschließlich von dem Luftdruck stromab des Leistungsstellgliedes (9) abhängig, zugeführt wird, und
(e) wobei nur in dem ersten Bereich (B1 der temperaturabhängig arbeitende Regler (11) aktiv ist und beide Bereiche durch eine Grenzlinie (GL) des Kennfeldes entsprechend einem konstanten Luftdruck stromab des Leistungssteuergliedes (9) voneinander getrennt sind,
(f) wobei der Brennkraftmaschine (1) eine Motorsteuerung (22) mit einer Klopfregelung (23) zugeordnet ist,
(g) wobei die Klopfregelung (23) in beiden Bereichen (B1 und B2) wirksam ist und
(h) wobei in Schritt (c) zusätzlich zur Zuführung von Warmluft das Leistungsstellglied (9) in Abhängigkeit von der aktuellen Ansauglufttemperatur derart verstellt wird, dass der für die gewünschte Leistung erforderliche Luftmassenstrom zugeführt wird.

2. Brennkraftmaschine (1), mit einer mit einem Warmluft- und einem Kaltluftstutzen (3 und 4) versehenen Ansaugleitung (2), einem stromab dazu liegenden, die Querschnittsfläche der Ansaugleitung (2) verändernden, lastregelnden Leistungsstellglied (9), mit einem von dem stromab des Leistungsstellgliedes (9) in der Ansaugleitung (2) herrschenden Luftdruck beaufschlagten, temperaturabhängig arbeitenden Regler (11) zur Steuerung des Zustromes von Kaltluft oder Warmluft, wobei
(a) das Gehäuseinnere des Reglers (11) mit dem Innenvolumen des Luftfilters (5) verbunden ist,
(b) der Regler (11) im Zuge der Ansaugleitung (2) angeordnet und von der Ansauglufttemperatur beaufschlagt ist und in Abhängigkeit davon eine Verbindungsleitung (21) zwischen der Ansaugleitung (2) stromauf des Leistungsstellgliedes (9) und stromab des Leistungsstellgliedes (9) öffnet oder schließt,
(c) ein Unterdruck, welcher sich aufgrund der sich über das Leistungsstellglied (9) einstellenden Druckdifferenz (Δp) ergibt, durch eine Verbindungsleitung (14) vom Regler (11) auf einen pneumatischen Stellmotor (15) übertragen wird, welcher mit einer zwischen Kaltluftstutzen (3) und Warmluftstutzen (4) angeordneten Warmluftklappe (16) verbunden ist, und
(d) bei Unterschreiten einer bestimmten Druckdifferenz (Δp) der Warmluftstutzen (4) von der Warmluftklappe (16) verschlossen ist,
**dadurch gekennzeichnet**,
(e) **dass** der Brennkraftmaschine (1) eine Motorsteuerung (22) mit Klopfregelung (23) zugeordnet ist und
(f) **dass** eine Ansteuerung für das Leistungsstellglied (9) derart ausgebildet ist, dass diese zusätzlich zur Regelung der Zuführung von Warmluft das Leistungsstellglied (9) in Abhängigkeit von der aktuellen Ansauglufttemperatur derart verstellt, dass sich der für die gewünschte Leistung erforderliche Luftmassenstrom ergibt.

## Claims

1. Method for operating an internal combustion engine (1) to which intake air is fed as cold air from the surroundings or preheated warm air is fed as a function of load and/or temperature via an intake line (2), a load-regulating power actuator element (9) which changes the cross-sectional area of the intake line (2) being arranged in the further course of the intake line (2) and the air pressure which is present downstream of said power actuator element (9) controls the inflow of cold air with the intermediate connection of a regulator (11) which operates at least as a function of temperature,
(a) the interior of the housing of the regulator (11) being connected to the internal volume of the air filter (5),
(b) warm air being fed in a first region (B1) of a load/rotational speed characteristic diagram of the internal combustion engine (1), and only cold air being fed in a second region (B2), both in the operationally cold and operationally warm states of the internal combustion engine,
(c) warm air being fed in the first region (B1) over the entire rotational speed range of the internal combustion engine (1) until an upper air temperature value which can be preset in the regulator (11) is reached, and the regulator (11) then regulating to this air temperature value while adding cold air in the region (B1),
(d) atmospheric cold air being fed in the second region (B2) over the entire rotational speed range of the internal combustion engine (1), independently of the temperature of said cold air and exclusively as a function of the air pressure downstream of the power actuator element (9), and
(e) the regulator (11) which operates as a function of temperature being active only in the first region (B1), and both regions being separated from one another by a limiting line (GL) of the characteristic diagram in accordance with a constant air pressure downstream of the power control element (9),
(f) an engine controller (22) with a knocking controller (23) being assigned to the internal combustion engine (1),
(g) the knocking controller (23) being effective in both regions (B1 and B2), and
(h) the power actuator element (9) being adjusted in step (c) - in addition to the feeding of warm air - as a function of the current intake air temperature in such a way that the air mass flow rate which is necessary for the desired power is fed.

2. Internal combustion engine (1) having an intake line (2) which is provided with a warm air connector (3) and a cold air connector (4), a load-regulating power actuator element (9) which is located downstream of said intake line (2) and changes the cross-sectional area of the intake line (2), having a regulator (11) to which the air pressure prevailing downstream of the power actuator element (9) in the intake line (2) is applied, which operates as a function of temperature and which has the purpose of controlling the inflow of cold air or warm air,
(a) the interior of the housing of the regulator (11) being connected to the internal volume of the air filter (5),
(b) the regulator (11) being arranged in the course of the intake line (2) and having the intake air temperature applied to it and opening or closing, as a function thereof, a connecting line (21) between the intake line (2) upstream of the power actuator element (9) and downstream of the power actuator element (9),
(c) a partial vacuum which is produced on the basis of the pressure difference (Δp) which occurs across the power actuator element (9), being transmitted by a connecting line (14) from the regulator (11) to a pneumatic servomotor (15) which is connected to a warm air vent (16) which is arranged between the cold air connector (3) and warm air connector (4), and
(d) the warm air connector (4) being closed off by the warm air vent (16) when a specific pressure difference (Δp) is undershot,
**characterized**
(e) **in that** an engine controller (22) with a knocking controller (23) is assigned to the internal combustion engine (1), and
(f) **in that** an actuation means for the power actuator element (9) is embodied in such a way that it adjusts the power actuator element (9) - in addition to regulating the feeding of warm air - as a function of the current intake air temperature in such a way that the air mass flow rate which is necessary for the desired power is produced.

## Revendications

1. Procédé pour actionner un moteur à combustion interne (1), dans lequel de l'air d'aspiration est introduit en fonction de critères de température et/ou de charge le long d'une conduite d'aspiration (2) en tant qu'air froid provenant de l'environnement extérieur ou air chaud préchauffé, dans lequel, sur une portion plus avancée de la conduite d'aspiration (2), un actionneur de puissance (9) régulateur de charge, qui modifie la surface de section transversale de ladite conduite d'aspiration, est disposé et la pression de l'air présent dans ladite conduite d'aspiration régule l'afflux d'air froid par l'entremise d'une unité de commande (11) régie au moins par des critères de température,
(a) dans lequel l'intérieur du logement de l'unité de commande (11) est relié au volume interne du filtre à air (5),
(b) dans lequel, à la fois dans des conditions de fonctionnement à froid et à chaud du moteur à combustion interne, de l'air chaud est introduit dans une première région (B1) d'un diagramme caractéristique charge/vitesse du moteur à combustion interne (1) et uniquement de l'air froid est introduit dans une deuxième région (B2),
(c) dans lequel, pour l'ensemble de la gamme des vitesses de rotation du moteur à combustion interne (1) dans la première région (B1), de l'air chaud est introduit jusqu'au moment où une valeur de température de l'air supérieure, prédéterminée par l'unité de commande (11), est atteinte et l'unité de commande (11) régule par la suite cette valeur de température de l'air par un mélange d'air froid dans la région (B1),
(d) dans lequel, pour l'ensemble de la gamme des vitesses de rotation du moteur à combustion interne (1) dans la deuxième région (B2), de l'air froid atmosphérique est introduit, indépendamment de sa température et exclusivement en fonction de la pression de l'air en aval de l'actionneur de puissance (9), et
(e) dans lequel, l'unité de commande (11) régie par des critères de température est active seulement dans la première région (B1) et les deux régions sont séparées l'une de l'autre par une limite (GL) du diagramme caractéristique correspondant à une pression de l'air constante en aval de l'actionneur de puissance (9),
(f) dans lequel une unité de commande du moteur (22) comportant une régulation du cliquetis (23) est coordonnée au moteur à combustion interne (1),
(g) dans lequel la régulation du cliquetis (23) fonctionne dans les deux régions (B1 et B2) et
(h) dans lequel à l'étape (c) l'actionneur de puissance (9) est de plus ajusté en fonction de la température actuelle d'air d'aspiration en vue de l'introduction d'air chaud, de telle sorte que le flux de masse d'air requis pour la performance souhaitée soit introduit.

2. Moteur à combustion interne (1), comportant une conduite d'aspiration (2) pourvue d'une buse d'air chaud et d'une buse d'air froid (3 et 4), d'un actionneur de puissance (9) régulateur de charge, qui modifie la surface de section transversale de la conduite d'aspiration (2) et se trouve en aval de celle-ci, d'une unité de commande (11) régie par des critères de température, sollicitée par une pression de l'air prédominante dans la conduite d'aspiration (2) en aval de l'actionneur de puissance (9) pour réguler l'afflux d'air froid ou d'air chaud, dans lequel
(a) l'intérieur du logement de l'unité de commande (11) est relié au volume interne du filtre à air (5),
(b) l'unité de commande (11) est disposée relativement à la conduite d'aspiration (2) et sollicitée par la température de l'air d'aspiration et, en fonction de cette dernière, une conduite de liaison (21) entre la conduite d'aspiration (2) en amont de l'actionneur de puissance (9) et en aval de l'actionneur de puissance (9) s'ouvre ou se ferme,
(c) une dépression, laquelle résulte de la différence de pression (Δp) étant ajustée par l'actionneur de puissance (9), est transmise par l'intermédiaire d'une conduite de liaison (14) de l'unité de commande (11) vers un servomoteur pneumatique (15), lequel est relié à un rabat d'air chaud (16) disposé entre une buse d'air froid (3) et une buse d'air chaud (4), et
(d) lorsqu'une certaine différence de pression (Δp) n'est pas atteinte, la buse d'air chaud (4) est fermée par le rabat d'air chaud (16),
**caractérisé en ce que**,
(e) une unité de commande du moteur (22) comportant une réqulation du cliquetis (23) est coordonnée au moteur à combustion interne (1),
(f) une unité de régulation de l'actionneur de puissance (9) est conçue de telle sorte que cette dernière ajuste de plus l'actionneur de puissance (9) en fonction de la température actuelle d'air d'aspiration pour réguler l'introduction d'air chaud, de telle sorte que le flux de masse d'air requis pour la performance souhaitée soit obtenu.
